# EUROPEAN PATENT SPECIFICATION

(11) **EP 2 199 556 B1**
(45) Date of publication and mention of the grant of the patent: **27.02.2013**
(21) Application number: 09178283.9
(22) Date of filing: 08.12.2009
(51) Int. Cl.: F01N 3/20, F04B 35/04

(54) **Urea storage system**
Harnstoffaufbewahrungssystem
Système de stockage d'urée

(30) Priority: 18.12.2008 US 338193
(43) Date of publication of application: 23.06.2010
(73) Proprietor: Delphi Technologies, Inc., Troy MI 48007 (US)
(72) Inventor: Lecea, Oscar Alfonso, Grand Blanc, MI 48439 (US); Goulette, David Alexander, Marine City, MI 48039 (US); McClanahan, Mark Ray, Goodrich, MI 48438 (US)
(74) Representative: Denton, Michael John

(56) References cited:
- DE-A1-102005 037 201
- DE-A1-102006 027 487
- DE-A1-102006 046 900
- FR-A1- 2 904 379
- US-A1- 2005 252 201

## Description

### TECHNICAL FIELD

The present disclosure relates to pumps for vehicle mounted urea reservoirs.

### BACKGROUND OF THE INVENTION

Urea selective catalyst reaction (SCR) systems treat diesel exhaust to reduce tailpipe emissions. A urea and water solution is injected into the exhaust stream. Hydrolysis converts the solution to ammonia upstream of a SCR catalyst converter. The ammonia reacts with NO₂ trapped on the SCR catalyst to form N₂ and CO₂ and thus reduce pollution of the diesel exhaust.

At temperatures below -11 °C, the urea solution freezes into solid ice. A thermal heating system thaws the solid ice into liquid solution. A pump transports the thawed solution to an injector that is in the exhaust stream. In order to provide adequate operation during cold weather, a predetermined amount of the urea solution must be proximate the heater and the pump's pickup tube. This is accomplished by using a reservoir within the urea solution storage tank. The reservoir holds the heater and the predetermined amount of urea. The solution level within the reservoir is typically even with the solution level within the remainder of the storage tank unless a pump and check valve system is employed. The pump and check valve system pumps solution from the storage tank into the reservoir, thereby raising the solution level within the reservoir to above the solution level in the remainder of the storage tank. A check valve prevents the solution from draining out of the reservoir and back into the storage tank.

Such a system is known for example from document DE 10 2006 046 900 A.

Present designs do not have pumps due to cost and reliability issues related to freezing and thawing of the urea solution. Meeting legislated emission requirements is not a problem if the storage tank is full of solution when it freezes. However, if the solution level in the storage tank is low, such as 25% full, the solution level in the reservoir is not sufficient to supply the amount of urea demanded until the outer tank thaws, which may not be sufficient to provide urea to the exhaust treatment system.

### SUMMARY OF THE INVENTION

A urea storage system comprising a storage tank for a urea solution is provided. The system comprises a heated reservoir a channel connecting the storage tank to said heated reservoir and a pump for drawing urea from the heated reservoir. A second pump including an actuator comprising a memory shape metal for drawing urea from the storage tank to the heated reservoir is also provided.

The invention also contemplates a method of pumping urea solution in a urea storage system. The method provides a urea storage tank and a urea reservoir fluidly connected to the storage tank. A pump, including an actuator is interposed between the storage tank and the reservoir. The method comprises moving the actuator to a first position by energizing a shape memory metal attached to the actuator and moving the actuator to a second position by de-energizing the shape memory metal attached to said actuator of said pump. Finally, the method comprises decompressing a spring in contact with said actuator.

The present invention provides a simple mechanism for pumping urea solution in applications where urea is subject to freeze/thaw cycles. Such applications include motor vehicles that are subject to ambient temperatures below the freezing point of the urea solution. The simplicity of the disclosed pumping mechanism is tolerant of frozen urea solution and provides a method of quickly thawing frozen urea for maintaining liquid urea for exhaust treatment. The present invention resumes pumping when the urea solution within it has been sufficiently heated to return to a liquid state.

### BRIEF DESCRIPTION OF THE DRAWINGS

The subject matter, which is regarded as the invention, is particularly pointed out and distinctly claimed in the claims at the conclusion of the specification. The foregoing and other features and advantages of the invention will become apparent from the following detailed description taken in conjunction with the drawings in which:

FIG 1 is a functional block diagram of one embodiment urea of a solution storage system in accordance with the present invention;

FIG 2 is a pictorial of the pump and reservoir, partially in cross-section, in accordance with the present invention;

FIG 3 is a functional block diagram of the pump in accordance with the present invention; and

FIG 4 is a pictorial view of the reservoir partially in cross-section, in accordance with the present invention.

### DESCRIPTION OF THE PREFERRED EMBODIMENTS

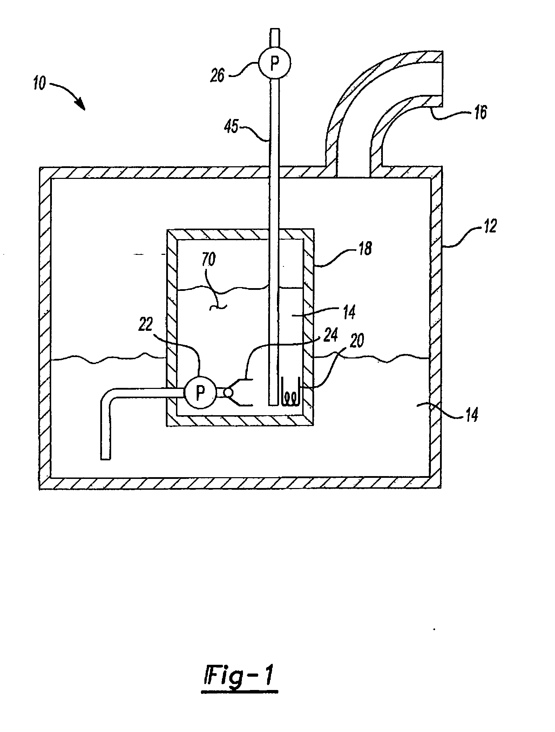

Referring now to FIG 1, a functional block diagram is shown of a urea storage system 10. Storage system 10 includes a storage tank 12 that contains a urea solution 14. Urea solution 14 can be refilled via a filler opening 16. Storage tank 12 includes a reservoir 18. Reservoir 18 contains a portion of solution 14 within a volume that can be heated by a heater 20. A pump 22 pumps solution 14 into reservoir 18. The level of solution 14 can therefore be higher than the solution level in tank 12 providing a pressure load in reservoir 18 that is greater than the pressure head within tank 12. A check valve 24 prevents solution 14 from draining out of reservoir 18 and returning to storage tank 12. Another pump 26 transports solution 14 from reservoir 18 to a urea injection system that injects solution 14 into the engine exhaust stream.

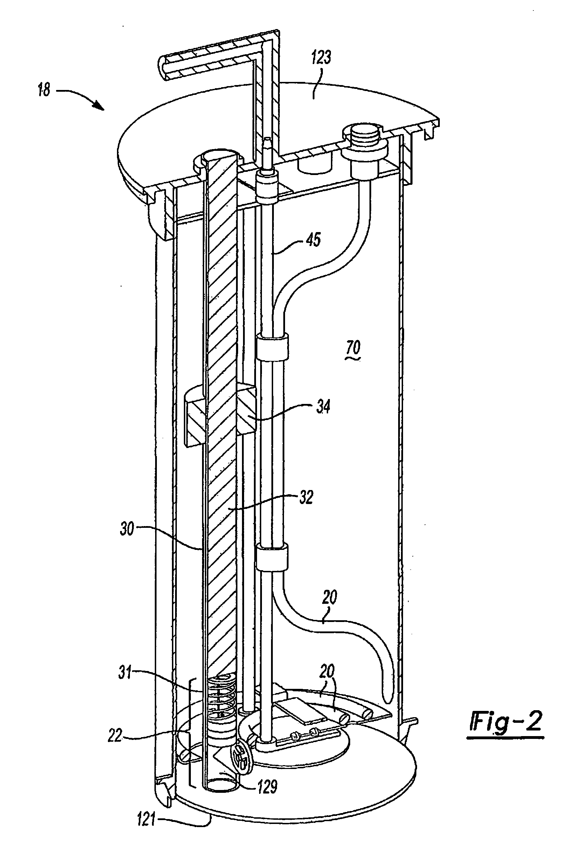

Referring now to FIG 2, one of several embodiments is shown of reservoir 18. Reservoir 18 includes a level sensing tube 30 that contains a printed circuit board (PCB) 32. PCB 32 includes electronic circuitry that senses the position or height of a level sensing float 34. Level sensing tube 30 contains PCB 32 and guides level sensing float 34 which is concentric to tube 30 and rides circumferentially thereon. Level sensing tube 30 also serves as a cylinder which houses pump 22 therein at a bottom portion 31 of tube 30. Heater 20 heats urea solution in the proximity of level sensing tube 30 and at the bottom of reservoir 18.

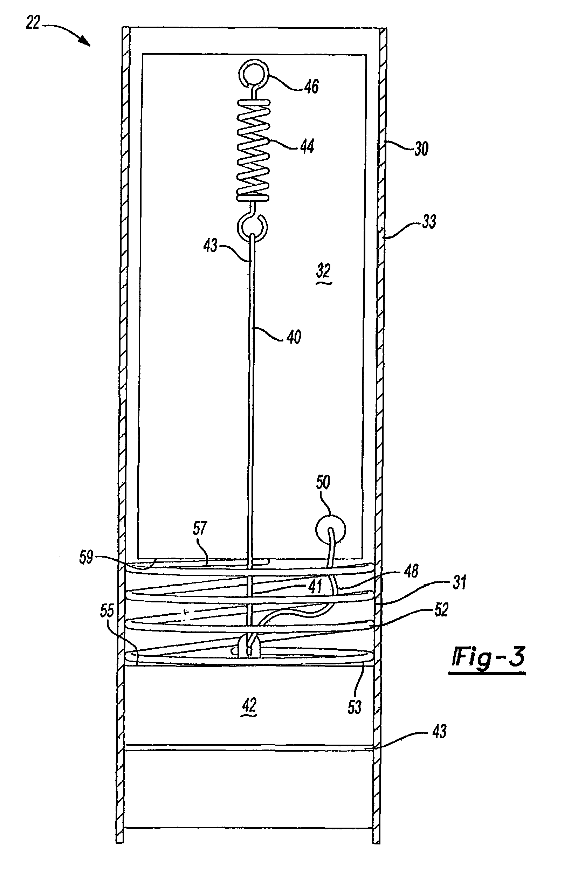

Referring now to FIG 3, a functional block diagram is shown of pump 22. PCB 32 is secured within level sensing tube 30 at an upper end 33. A shape memory metal, shown as shape memory wire 40 is disposed within upper end 33 and is adapted to expand and contract based on temperature. As shown, a first end 41 of shape memory wire 40 attaches to a piston 42. Piston 42 includes a sealing ring 43 about the circumference of piston 42 and in contact with the inner circumference of bottom portion 31 of tube 30. A second end 43 of shape memory wire 40 attaches to PCB 32 through a strain limiting spring 44. Spring 44 is employed to limit strain in shape memory wire 40. However, it will be appreciated that any elastic member capable of conducting electricity can be substituted. In addition, strain limiting spring 44 is shown as being connected between PCB 32 and shape memory wire 40 at a second end 43; however, it will be appreciated that spring 44 may also be connected at the first end 41 of shape memory wire 40, between shape memory wire 41 and piston 42.

PCB 32 is connected to a power source and includes electrical terminals 46 and 50, extending therefrom, that selectively provide electrical energy. The electrical energy is communicated to shape memory wire 40 via strain-limiting spring 44 connected to terminal 46 and a wire lead 48. Wire lead 48 communicates between the bottom end of shape memory wire 40 and terminal 50. Charging shape memory wire 40 with electrical energy causes it to heat up. As shape memory wire 40 is heated it contorts, causing its axial length to shrink. The contortion causes piston 42 to axially traverse along the length of level sensing tube 30 and bear against a spring 52 disposed within bottom portion 31 of tube 30. A first end 53 of spring 52 bears against an upper end 55 of piston 42, while a second end 57 of spring 52 bears against the lower portion 59 of PCB 32. Since the spring constant "K" of spring 52 is less than the spring constant "K" of strain limiting spring 44, then the contortion and resulting axial reduction in length of shape memory wire 40 causes piston spring 52 to deflect first. When the electrical energy is cycled off, the shape memory wire 40 cools, indeed can be quickly cooled by the urea solution 14 in reservoir 18 that surrounds sensing tube 30. Upon cooling, the axial length of memory wire 40 expands, allowing piston spring 52 to push piston 42 downward to the bottom of its stroke within bottom portion 31 of tube 30.

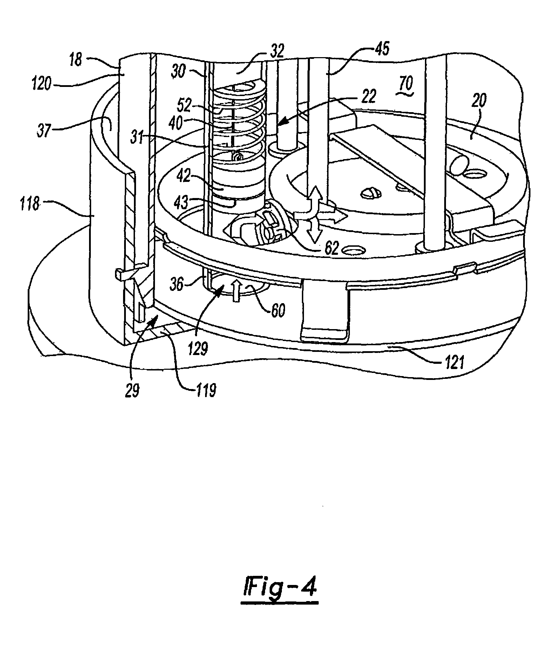

Referring now to FIG 4, where a partial view of reservoir 18 is shown, a partially circumferential channel 37 is formed by the bottom of reservoir 18 to allow urea solution 14 to enter a first chamber 29. Specifically, reservoir 18 comprises a cylindrical bottom portion 118 with a bottom end wall 119 and a cylindrical upper portion 120 capped at both ends with a lower end wall 121 and with an upper end wall 123 (shown in FIG 2). Cylindrical bottom portion 118 is concentric with cylindrical upper portion 120 and has a larger diameter, such that the outer diameter of upper portion 120 fits within the inner diameter of bottom portion 118 to form circumferential channel 37. Lower end wall 121 is spaced above end wall 119 to form the first chamber 29.

After urea solution 14 flows from tank 12 to reservoir 18 through circumferential channel 37 a first check valve 60, shown as an umbrella valve through lower end wall 121 is configured to allow urea solution 14 to flow from first chamber 29 and enter a cavity 129 formed in level sensing tube 30 by the upstroke of piston 42. After cavity 129 has been filled with urea solution 14 by the upstroke of piston 42, shape memory wire 40 can be de-energized and allowed to cool. Thereafter, piston spring 52 forces piston 42 in a downward stroke. A second check valve 62, also an umbrella valve, is configured to pass urea solution 14 from level sensing tube 30 to an interior portion 70 of reservoir 18 as piston 42 continues its downward stroke into cavity 129. It will be appreciated that the flow rate of the urea solution 14 into interior portion 70 is adjustable. For example, by adjusting the stroke of piston 42, the area of the head of piston 42, and/or the reciprocating frequency of piston 42 as controlled by the energizing and de-energizing of memory wire 40, the flow rate into reservoir 18 can be matched to any specified criteria.

Once urea solution 14 has been pumped into the interior portion 70 of reservoir 18, it forms a pressure head therein that is greater than the pressure head of tank 12, within which reservoir 18 is positioned. The positioning of heater 20 near lower end wall 121 of reservoir 18 allows interior portion 70 to be quickly and efficiently heated, thus quickly thawing urea solution 14 when heater 20 is energized. Therefore, pump 26 can draw liquid urea solution 14 via a draw pipe 45 connected to pump 26 soon after heater 20 is energized. Level sensing float 34 floats on urea solution within interior portion 70. As described above, PCB 32 senses the level of float 34 for purpose of energizing memory wire 40 to insure reservoir 18 contains a sufficient amount of urea solution 14 in preparation for the next freeze/thaw cycle. In addition float 34 may also be used as a urea solution 14 level signal to activate pump 26.

Pump 22 is very simple, requires minimal power, is very compact, inexpensive and has very few moving parts. Pump 22 is robust to the expansion and contraction of the urea solution as it freezes and thaws. The memory shape wire 40 drive system for piston 42 allows the urea solution 14 to freeze and expand without damaging pump 22. It will be appreciated by those skilled in the art that the displaced volume provided by piston 42 and level sensing tube 30 may also be provided by bellows, a diaphragm, or the like that are actuated by a shape memory wire 40 and counter spring equivalent to spring 52. In addition, it will be understood by one skilled in the art that any type of pressure relief valve may be substituted for the umbrella check valves 60 and 62 disclosed herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A urea storage system (10) comprising;
a storage tank (12) for a urea solution (14);
a heated reservoir (18);
a channel connecting said storage tank (12) to said heated reservoir (18);
a pump (26) for drawing urea from said heated reservoir (18); and
**characterised in that** the system further comprises
a second pump (22) including an actuator (42) comprising a memory shape metal (40) for drawing urea from said storage tank (12) to said heated reservoir (18);

2. The urea storage system of claim 1, wherein said heated reservoir is disposed within said storage tank.

3. The urea storage system of claim 1 or claim 2, wherein said heated reservoir has a first pressure head and said storage tank has a second pressure head, said first pressure head being greater than said second pressure head.

4. The urea storage system of any one of claims 1 to 3, including a drawpipe disposed within said heated reservoir and connected to said second pump.

5. The urea storage system of any one of claims 1 to 4, wherein said reservoir comprises a first portion and a second portion, said channel disposed between said first portion and said second portion.

6. The urea storage system of claim 5, wherein said first portion is cylindrical and said second portion is cylindrical and concentric to said first portion, said channel being partially circumferential and disposed between said first portion and said second portion.

7. The urea storage system of any one of claims 1 to 6, wherein said second pump includes a pump cavity having a first valve in fluid communication with said storage tank and a second valve in fluid communication with said reservoir.

8. The urea storage system of claim 7, wherein said actuator comprises a piston disposed in said cavity and attached to said shape memory metal.

9. The urea storage system of claim 8, wherein said piston has a first position and a second position, said first position opening said first valve, said second position opening said second valve.

10. The urea storage system of any one of claims 7 to 9, wherein one of said first valve and said second valve is an umbrella valve.

11. The urea storage system of any one of claims 1 to 7, wherein said actuator comprises a piston and said shape memory metal is a shape memory wire, said shape memory wire attached to said piston.

12. The urea storage system of any one of claims 1 to 7, wherein said actuator comprises a piston having a first position in which said shape memory metal is electrically energized and a second position in which said shape memory metal is de-energized.

13. The urea storage system of claim 12, wherein said actuator includes a spring in contact with said piston, said spring actuating said piston from said first position from said first position to said second position.

14. A method of pumping urea solution in a urea storage system (10) comprising:
providing a urea storage tank (12);
providing a heated a urea reservoir (18) fluidly connected to said storage tank (12);
providing a pump (26) for drawing urea from said heated reservoir (18) the method being **characterised by** comprising the further steps of
providing a second pump (22) including an actuator (42) interposed between said storage tank (12) and said reservoir: (18)
moving said actuator (42) to a first position by energizing a shape memory metal (40) attached to said actuator (42);
moving said actuator to a second position by de-energizing the shape memory metal (40) attached to said actuator of said pump (22) and decompressing a spring (44) in contact with said actuator (42).

15. The method of claim 14, including opening a first valve in fluid communication with said storage tank upon moving said actuator to said first position and opening a second valve in fluid communication with said reservoir upon moving said actuator to said second position.

## Patentansprüche

1. Harnstoff-Speichersystem (10), das aufweist:
einen Vorratstank (12) für eine Harnstofflösung (14);
ein beheiztes Reservoir (18);
einen Kanal, der den Vorratstank (12) mit dem beheizten Reservoir (18) verbindet;
eine Pumpe (26) zum Saugen von Harnstoff aus dem beheizten Reservoir (18); und
dadurch gekennzeichnet, dass das System weiter aufweist
eine zweite Pumpe (22) mit einem Aktuator (42), der ein Formgedächtnismetall (40) aufweist zum Saugen von Harnstoff aus dem Vorratstank (12) zu dem beheizten Reservoir (18).

2. Das Harnstoff-Speichersystem gemäß Anspruch 1, wobei das beheizte Reservoir in dem Vorratstank angeordnet ist.

3. Das Harnstoff-Speichersystem gemäß Anspruch 1 oder Anspruch 2, wobei das beheizte Reservoir eine erste Druckhöhe hat und der Vorratstank eine zweite Druckhöhe hat, wobei die erste Druckhöhe größer ist als die zweite Druckhöhe.

4. Das Harnstoff-Speichersystem gemäß einem der Ansprüche 1 bis 3, das eine Saugröhre umfasst, die in dem beheizten Reservoir angeordnet ist und mit der zweiten Pumpe verbunden ist.

5. Das Harnstoff-Speichersystem gemäß einem der Ansprüche 1 bis 4, wobei das Reservoir einen ersten Teil und einen zweiten Teil aufweist, wobei der Kanal zwischen dem ersten Teil und dem zweiten Teil angeordnet ist.

6. Das Harnstoff-Speichersystem gemäß Anspruch 5, wobei der erste Teil zylindrisch ist und der zweite Teil zylindrisch und konzentrisch ist zu dem ersten Teil, wobei der Kanal teilweise umlaufend ist und zwischen dem ersten Teil und dem zweiten Teil angeordnet ist.

7. Das Harnstoff-Speichersystem gemäß einem der Ansprüche 1 bis 6, wobei die zweite Pumpe einen Pumpenhohlraum umfasst mit einem ersten Ventil in Fluidverbindung mit dem Vorratstank und einem zweiten Ventil in Fluidverbindung mit dem Reservoir.

8. Das Harnstoff-Speichersystem gemäß Anspruch 7, wobei der Aktuator einen Kolben aufweist, der in dem Hohlraum angeordnet ist und an dem Formgedächtnismetall befestigt ist.

9. Das Harnstoff-Speichersystem gemäß Anspruch 8, wobei der Kolben eine erste Position und eine zweite Position hat, wobei die erste Position das erste Ventil öffnet, wobei die zweite Position das zweite Ventil öffnet.

10. Das Harnstoff-Speichersystem gemäß einem der Ansprüche 7 bis 9, wobei eines des ersten Ventils und des zweiten Ventils ein Schirmventil ist.

11. Das Harnstoff-Speichersystem gemäß einem der Ansprüche 1 bis 7, wobei der Aktuator einen Kolben aufweist und das Formgedächtnismetall ein Formgedächtnisdraht ist, wobei der Formgedächtnisdraht an dem Kolben befestigt ist.

12. Das Harnstoff-Speichersystem gemäß einem der Ansprüche 1 bis 7, wobei der Aktuator einen Kolben aufweist mit einer ersten Position, in der das Formgedächtnismetall elektrisch angeschaltet ist, und einer zweiten Position, in der das Formgedächtnismetall abgeschaltet ist.

13. Das Harnstoff-Speichersystem gemäß Anspruch 12, wobei der Aktuator eine Feder in Kontakt mit dem Kolben umfasst, wobei die Feder den Kolben aus der ersten Position in die zweite Position betätigt.

14. Ein Verfahren zum Pumpen von Harnstofflösung in einem Harnstoff-Speichersystem (10), das aufweist:
Vorsehen eines Hamstoff-Vorratstanks (12);
Vorsehen eines beheizten Harnstoff -Reservoirs (18), das fluidmäßig mit dem Vorratstank (12) verbunden ist;
Vorsehen einer Pumpe (26) zum Saugen von Harnstoff aus dem beheizten Reservoir (18);
wobei das Verfahren **dadurch gekennzeichnet ist, dass** es die weiteren Schritte aufweist
Vorsehen einer zweiten Pumpe (22) mit einem Aktuator (42) zwischen dem Vorratstank (12) und dem Reservoir (18) angeordnet;
Bewegen des Aktuators (42) in eine erste Position durch Anschalten eines Formgedächtnismetalls (40), das an dem Aktuator (42) befestigt ist;
Bewegen des Aktuators in eine zweite Position durch Abschalten des Formgedächtnismetalls (40), das an dem Aktuator der Pumpe (22) befestigt ist, und Druckentlasten einer Feder (44) in Kontakt mit dem Aktuator (42).

15. Das Verfahren gemäß Anspruch 14, das umfasst ein Öffnen eines ersten Ventils in Fluidverbindung mit dem Vorratstank bei einem Bewegen des Aktuators in die erste Position und Öffnen eines zweiten Ventils in Fluidverbindung mit dem Reservoir bei einem Bewegen des Aktuators in die zweite Position.

## Revendications

1. Système de stockage d'urée (10) comprenant :
une cuve de stockage (12) pour une solution d'urée (14) ;
un réservoir chauffé (18) ;
un canal qui connecte ladite cuve de stockage (12) audit réservoir chauffé (18) ;
une pompe (26) pour aspirer de l'urée depuis ledit réservoir chauffé (18) ; et
caractérisé en ce que le système comprend en outre
une seconde pompe (22) incluant un actionneur (42) qui comprend un métal à mémoire de forme (40) pour aspirer l'urée depuis ladite cuve de stockage (12) vers ledit réservoir chauffé (18).

2. Système de stockage d'urée selon la revendication 1, dans lequel ledit réservoir chauffé est disposé à l'intérieur de ladite cuve de stockage.

3. Système de stockage d'urée selon la revendication 1 2, dans lequel ledit réservoir chauffé est chargé sous une première pression et ladite cuve de stockage est chargée sous une seconde pression, ladite première pression étant supérieure à ladite seconde pression.

4. Système de stockage d'urée selon l'une quelconque des revendications 1 à 3, incluant un tube d'aspiration disposé à l'intérieur dudit réservoir chauffé et connecté à ladite seconde pompe.

5. Système de stockage d'urée selon l'une quelconque des revendications 1 à 4, dans lequel ledit réservoir comprend une première portion et une seconde portion, ledit canal étant disposé entre ladite première portion et ladite seconde portion.

6. Système de stockage d'urée selon la revendication 5, dans lequel ladite première portion est cylindrique et ladite seconde portion est cylindrique et concentrique à ladite première portion, ledit canal étant partiellement circonférentiel et disposé entre ladite première portion et ladite seconde portion.

7. Système de stockage d'urée selon l'une quelconque des revendications 1 à 6, dans lequel ladite seconde pompe inclut une cavité de pompe ayant une première valve en communication fluidique avec ladite cuve de stockage et une seconde valve en communication fluidique avec ledit réservoir.

8. Système de stockage d'urée selon la revendication 7, dans lequel ledit actionneur comprend un piston disposé dans ladite cavité et attaché audit métal à mémoire de forme.

9. Système de stockage d'urée selon la revendication 8, dans lequel ledit piston présente une première position et une seconde position, ladite première position ouvrant ladite première valve, ladite seconde position ouvrant ladite seconde valve.

10. Système de stockage d'urée selon l'une quelconque des revendications 7 à 9, dans lequel une valve parmi ladite première valve et ladite seconde valve est une valve du type en parapluie.

11. Système de stockage d'urée selon l'une quelconque des revendications 1 à 7, dans lequel ledit actionneur comprend un piston et ledit métal à mémoire de forme est un fil à mémoire de forme, ledit fil à mémoire de forme étant attaché audit piston.

12. Système de stockage d'urée selon l'une quelconque des revendications 1 à 7, dans lequel ledit actionneur comprend un piston ayant une première position dans laquelle ledit métal à mémoire de forme est électriquement excité et seconde position dans laquelle ledit métal à mémoire de forme est désexcité.

13. Système de stockage d'urée selon la revendication 12, dans lequel ledit actionneur inclut un ressort en contact avec ledit piston, ledit ressort actionnant ledit piston depuis ladite première position vers ladite seconde position.

14. Procédé pour pomper une solution d'urée dans un système de stockage d'urée (10), comprenant :
fournir une cuve de stockage d'urée (12) ;
fournir un réservoir d'urée chauffé (18) connecté sur le plan fluidique à ladite cuve de stockage (12) ;
fournir une pompe (26) pour aspirer l'urée depuis ledit réservoir chauffé (18),
le procédé étant **caractérisé en ce qu'**il comprend en outre les étapes consistant à :
fournir une seconde pompe (22) incluant un actionneur (42) interposé entre ladite cuve de stockage (12) et ledit réservoir (18) ;
déplacer ledit actionneur (42) à une première position en excitant un métal à mémoire de forme (40) attaché audit actionneur (42) ;
déplacer ledit actionneur à une seconde position en désexcitant le métal à mémoire de forme (40) attaché audit actionneur de ladite pompe (22) et en décomprimant un ressort (44) en contact avec ledit actionneur (42).

15. Procédé selon la revendication 14, incluant d'ouvrir une première valve en communication fluidique avec ladite cuve de stockage lors du déplacement dudit actionneur à ladite première position, et d'ouvrir une seconde valve en communication fluidique avec ledit réservoir lors du déplacement dudit actionneur à ladite seconde position.
